# EUROPEAN PATENT APPLICATION

(11) **EP 2 088 315 A2**
(43) Date of publication of application: **12.08.2009**
(21) Application number: 08161870.4
(22) Date of filing: 05.08.2008
(51) Int. Cl.: F03D 11/00, F03D 7/04

(54) **A method and system for providing electrical power to a wind turbine system**

(30) Priority: 20.08.2007 US 841270
(71) Applicant: GENERAL ELECTRIC COMPANY, Schenectady, NY 12345 (US)
(72) Inventor: Schellings, Vincent, 7522 EH Enschede (NL)
(74) Representative: Bedford, Grant Richard

(57) **Abstract**

A method and system for providing backup electrical power to at least one wind turbine 100 is provided. The method may include monitoring a first power system 105. The method may also include enabling a second power system 190, 190' when the first power system 105 may no longer provide sufficient electrical power to the wind turbine 100. The method may also disable the second power system 190, 190' when the first power system 105 can again provide sufficient electrical power to the wind turbine 100.

## Description

The present invention relates generally to the electrical power used to operate a wind turbine; and more particularly to a method and system for providing backup electrical power to the wind turbine.

A wind turbine (hereinafter "turbine") typically consumes electrical power (from a grid system, the turbine itself, or the like) in order to generate electricity. The electrical power may be received by a first power system, or the like, of the turbine. The first power system typically distributes the electrical power to various turbine systems including a turbine control system and a yaw drive system. The yaw drive system positions the nacelle of the turbine in the direction of the winds. Thus, the yaw drive system ensures that the blades of the turbine engage the dominant face of the winds.

The structure of the turbine is required to withstand potential storm loads. The severity of the storm loads varies on location where the turbine is installed. Certain geographical areas regularly experience severe storms such as: typhoons, hurricanes, or the like. During these severe storms operators of wind turbines usually stop generating electrical power. Furthermore, the yaw drive system may not function without the electrical power; causing the structure of the turbine to experience higher storm loads as the rotor is no longer facing the wind. Generally, the storm loads that a turbine experiences are significantly reduced if the yaw drive system operates during a severe storm, such as a typhoon.

There are a few problems with the currently known systems for providing electrical power to the wind turbine. The currently known systems may not automatically determine when backup power is needed. The currently known systems may not provide a backup (hereinafter 'second'; 'secondary', or the like) power system located near the wind turbine, to energize the yaw drive system when the first power system is not receiving power from the grid system.

For the foregoing reasons, there is a need for a method and system for providing a second source of electrical power to a wind turbine. The method should monitor the imported electrical power and determine when the second source is needed. The method should enable and disenable the second source as needed.

In accordance with an embodiment of the present invention, a method of providing electrical power to at least one wind turbine, the method comprising: providing at least one electrical power monitoring system, wherein the at least one electrical power monitoring system monitors an electrical power supplied to the at least one wind turbine; monitoring a first power system which supplies the electrical power to the at least one wind turbine; determining whether the electrical power supplied by the first power system is outside a first range; disabling the first power system if the electrical power is not inside the first range; and enabling a second power system to supply the electrical power after the first power system is disabled.

In accordance with an alternate embodiment of the present invention, a method of providing electrical power to at least one wind turbine, the method comprising: a method of providing electrical power to at least one wind turbine, the method comprising: providing at least one electrical power monitoring system, wherein the at least one electrical power monitoring system monitors an electrical power supplied to the at least one wind turbine; monitoring a first power system which supplies the electrical power to the at least one wind turbine; determining whether the electrical power supplied by the first power system is outside a first range; disabling the first power system if the electrical power is not inside the first range; enabling a second power system to supply the electrical power after the first power system is disabled, wherein the second power system comprises at least one of: a generator set; at least one battery; and combinations thereof; determining whether the first power system can supply the electrical power inside the first range after the second power system is enabled; disabling the second power system if the first power system can supply the electrical inside the first range; and reenabling the first power system to supply the electrical power to the at least one wind turbine.

In accordance with another alternate embodiment, a system for providing electrical power to at least one wind turbine, wherein the wind turbine comprises: a nacelle, a hub, a tower; the system comprising: at least one electrical power monitoring system, wherein the electrical power monitoring system monitors an electrical power supplied to the at least one wind turbine; a first power system which supplies the electrical power to the at least one wind turbine; a first power system monitor; means for determining whether the electrical power supplied by the first power system is outside a first range; a first power system disabler if the electrical power is not inside the first range; a second power system to supply the electrical power after the first power system is disabled; wherein the second power system comprises at least one of: a generator set; at least one battery; and combinations thereof; means for enabling the second power system; means for determining whether the first power system can supply the electrical power inside the first range, after the second power system is enabled; means for disabling the second power system, if the first power system can supply the electrical inside the first range; and means for reenabling the first power system.

Various aspects and embodiments of the present invention will now be described in connection with the accompanying drawings, in which:
Figure 1 is a schematic illustrating the environment in which an embodiment of the present invention operates.
Figure 2 is a flowchart illustrating an example of a method of providing electrical power to at least one wind turbine in accordance with an embodiment of the present invention.
Figure 3 is a block diagram of an exemplary system for providing electrical power to at least one wind turbine in accordance with an embodiment of the present invention.

As will be appreciated, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects all generally referred to herein as a "circuit", "module," or " system. " Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java7, Smalltalk or C++, or the like. However, the computer program code for carrying out operations of the present invention may also be written in conventional procedural programming languages, such as the "C" programming language, or a similar language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a public purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The following detailed description of preferred embodiments refers to the accompanying drawings, which illustrate specific embodiments of the invention. Other embodiments having different structures and operations do not depart from the scope of the present invention.

Embodiments of the present invention may the form of an application and process that provides at least one secondary source of electrical power to at least one wind turbine (hereinafter turbine, or the like). The present invention may monitor the first power system that receives and distributes the imported power to the turbine systems. After determining that the first power system is not distributing electrical power within a first range, an embodiment of the present invention may automatically enable at least one secondary power system to provide the electrical power to the turbine systems.

The second power system of the present invention may function as a stand-alone system, wherein an operator may manually engage and disengage the second power system, as needed. Alternatively, the second power system may be integrated as a module, or the like, within a broader system, such as a turbine control or a plant control system.

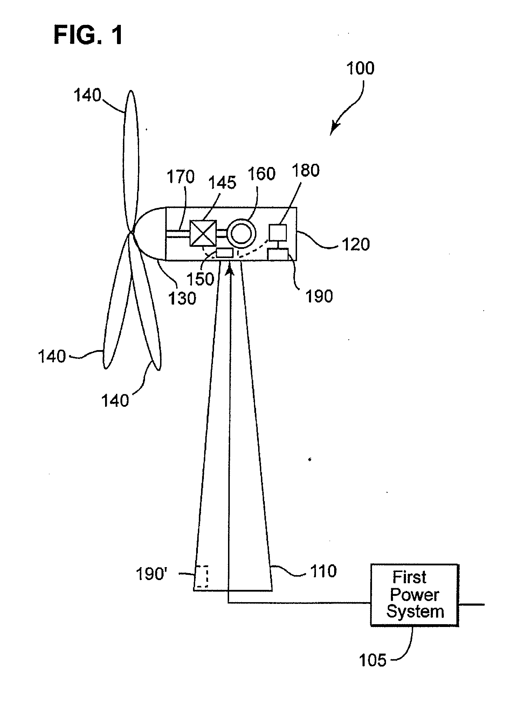

Referring now to the Figures, where the various numbers represent like elements throughout the several views, Figure 1 is a schematic illustrating the environment in which an embodiment of the present invention operates. Therein, a turbine 100 includes a first power system 105 and a tower 110 on which a nacelle 120 is mounted. At a lateral end of the nacelle 120, a hub 130 is mounted which supports a rotor (not illustrated) having a plurality of blades 140. As illustrated, disposed within the nacelle 120 are a gearbox 145, a yaw drive system 150, and a generator 160. The gearbox 145 and the generator 160 may be connected to the hub 130 via a drive train 170. Furthermore, a turbine control system 180 may also be disposed within the nacelle 120.

The turbine control system 180 may communicate with all turbine systems, such as but not limiting of, the yaw drive system 150 and a second power system 190. One advantage of the present invention is that the second power system 190 may be directly mounted to the turbine 100. Therefore, if there is a loss of power from the first power system 105, the second power system 190 may provide electrical power sufficient to operate the yaw drive system 150; thus allowing for the positioning of the nacelle 120 in the direction of the wind.

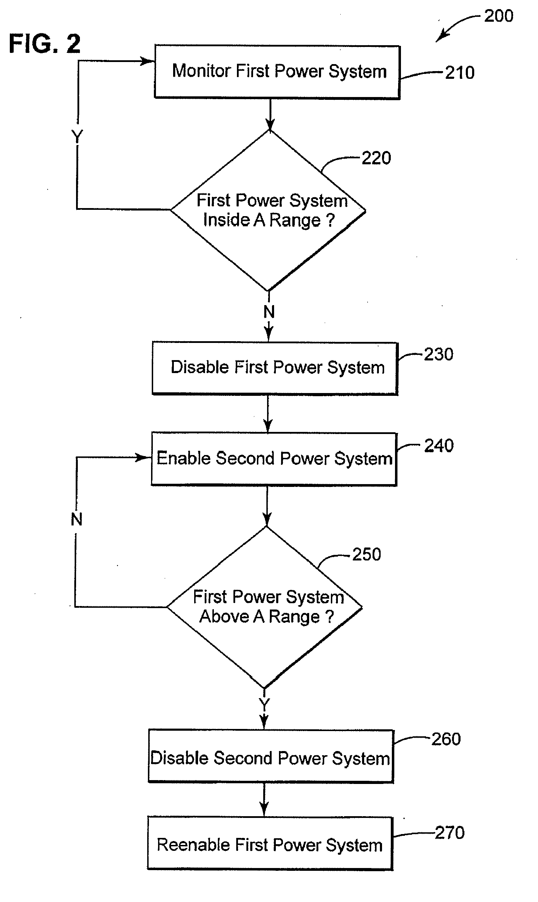

Referring now to Figure 2, which is a flowchart illustrating an example of a method 200 of providing electrical power to at least one turbine 100 in accordance with an embodiment of the present invention.

An embodiment of the method 200 may be configured to be initiated by a computer system or the like, and continuously operate. In an alternate embodiment of the present invention, the method 200 may be configured for a manual operation thereby requiring an operator to determine when the second power system may be required.

In step 210, the method 200 may be enabled to monitor the first power system 105 of at least one wind turbine 100. An embodiment of the present invention may be integrated with the first power system 105 and monitor, in real-time, the voltage, and/or current levels of the imported power. For example, but not limiting of, the site where the turbine 100 is installed may include a plurality of power meters, or the like, which may monitor imported power levels. Here, the present invention may receive data on voltage levels from the plurality of powers meters.

In step 220, the method 200 may determine whether the first power system 105 may be distributing electrical power outside a first range. The first range may be considered the level of power sufficient to energize the turbines systems such as, but not limiting to, the turbine control system 180 and the yaw drive system 150. The first range may be a tolerance band, or the like, around the voltage received from the first power system 105. For example, but not limiting of, the first range may be 90%-98% of the power required to energize the turbine systems. If the first power system 105 is not distributing power inside a first range; then the method 200 may proceed to step 230; otherwise the method 200 may revert to step 210.

In step 230, the method 200 may electrically disable the first power system 105 from the turbine 100. An embodiment of the present invention may include disconnect switches, or the like, which allow for the electrical isolation of the first power system 105 from turbine 100. An embodiment of the present invention may automatically disable the first power system 105. In an alternate embodiment of the present invention, an operator may manually disable the first power system 105 from the turbine 100.

In step 240, the method 200, may enable the second power system 190. The second power system 190 may be of various forms such as, but not limiting of, a generator set, at least one battery, and combinations thereof. The second power system 190 may be sufficiently sized to provide electrical power to energize the turbine control system 180 and the yaw drive system 150. In an alternate embodiment of the present invention, the second power system 190 may be sufficiently sized to provide electrical power to energize the necessary systems to allow the turbine 100 to generate electricity under normal operation, or the like

Various aspects of the present invention provide the flexibility of installing the second power system 190 in a variety of locations in and around the turbine 100. An embodiment of the present invention may have the second power system 190 installed within the nacelle 120 of the turbine 100. An alternate embodiment of the present invention may have the second power system 190' (as shown in Figure 1) installed within the tower 110 of the turbine 100. Another alternate embodiment of the present invention may have the second power system 190' (as shown in Figure 1) installed within or near the sub-station of the wind farm (not illustrated).

In step 250, the method 200 may determine whether the first power system 105 may be able to distribute electrical power to the turbine 100 inside the first range, as described above. Typically, the second power system 190 may provide electrical power to the turbine 100 for a limited time; depending on the type of second power system 190 employed. For example, but not limiting of, a generator set may be able to provide electrical power to energize the yaw system 150 and the turbine control system 180 for 1 week of continuous operation.

The method 200 may continuously monitor the first power system 105, while the second power system 190 is in operation, to determine if the first power system 105 can resume distributing electrical power inside the first range. If the first power system 105 can distribute electrical power inside the first range; then the method 200 may proceed to step 260; otherwise the method 200 may revert to step 240.

In step 260, the method 200 may disable the second power system 190. In an embodiment of the present invention, the method 200 may automatically disengage the second power system 190. In an alternate embodiment of the present invention, the method 200 may require that the second power system 190 be manually disengaged.

In step 270, the method 200 may reenable the first power system 105 to the distribute power to the turbine 100. As previously discussed, an embodiment of the present invention may include disconnect switches, or the like, which allow for electrically isolating the first power system 105 from turbine 100. Here, the method 200 may automatically reenable the disconnect switches to energize the systems of turbine 100. In an alternate embodiment of the present invention, an operator may manually disable the first power system 105 from the turbine 100.

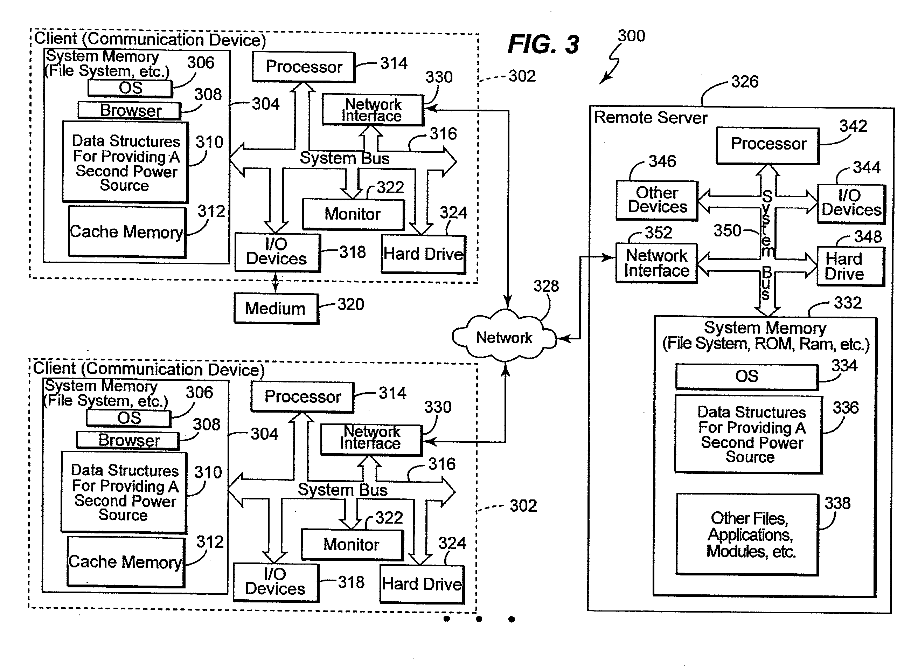

Referring now to Figure 3, which is a step diagram of an exemplary system 300 for providing electrical power to at least one turbine 100. The elements of the method 200 may be embodied in and performed by the system 300. The system 300 may include one or more user or client communication devices 302 or similar systems or devices (two are illustrated in Figure 3). Each communication device 302 may be for example, but not limited to, a computer system, a personal digital assistant, a cellular phone, or similar device capable of sending and receiving an electronic message.

The communication device 302 may include a system memory 304 or local file system. The system memory 304 may include for example, but is not limited to, a read only memory (ROM) and a random access memory (RAM). The ROM may include a basic input/output system (BIOS). The BIOS may contain basic routines that help to transfer information between elements or components of the communication device 302. The system memory 304 may contain an operating system 306 to control overall operation of the communication device 302. The system memory 304 may also include a browser 308 or web browser. The system memory 304 may also include data structures 310 or computer-executable code to provide electrical power to at least one turbine 100 that may be similar or include elements of the methods 200 in Figures 2.

The system memory 304 may further include a template cache memory 312, which may be used in conjunction with the method 200 in Figure 2 for providing electrical power to at least one turbine 100 to the turbine 100.

The communication device 302 may also include a processor or processing unit 314 to control operations of the other components of the communication device 302. The operating system 306, browser 308, and data structures 310 may be operable on the processing unit 314. The processing unit 314 may be coupled to the memory system 304 and other components of the communication device 302 by a system bus 316.

The communication device 302 may also include multiple input devices (I/O), output devices or combination input/output devices 318. Each input/output device 318 may be coupled to the system bus 316 by an input/output interface (not shown in Figure 3). The input and output devices or combination I/O devices 318 permit a user to operate and interface with the communication device 302 and to control operation of the browser 308 and data structures 310 to access, operate and control the software to provide electrical power to at least one turbine 100. The I/O devices 318 may include a keyboard and computer pointing device or the like to perform the operations discussed herein.

The I/O devices 318 may also include for example, but are not limited to, disk drives, optical, mechanical, magnetic, or infrared input/output devices, modems or the like. The I/O devices 318 may be used to access a storage medium 320. The medium 320 may contain, store, communicate, or transport computer-readable or computer-executable instructions or other information for use by or in connection with a system, such as the communication devices 302.

The communication device 302 may also include or be connected to other devices, such as a display or monitor 322. The monitor 322 may permit the user to interface with the communication device 302.

The communication device 302 may also include a hard drive 324. The hard drive 324 may be coupled to the system bus 316 by a hard drive interface (not shown in Figure 3). The hard drive 324 may also form part of the local file system or system memory 304. Programs, software, and data may be transferred and exchanged between the system memory 304 and the hard drive 324 for operation of the communication device 302.

The communication device 302 may communicate with a remote server 326 and may access other servers or other communication devices similar to communication device 302 via a network 328. The system bus 316 may be coupled to the network 328 by a network interface 330. The network interface 330 may be a modem, Ethernet card, router, gateway, or the like for coupling to the network 328. The coupling may be a wired or wireless connection. The network 328 may be the Internet, private network, an intranet, or the like.

The server 326 may also include a system memory 332 that may include a file system, ROM, RAM, and the like. The system memory 332 may include an operating system 334 similar to operating system 306 in communication devices 302. The system memory 332 may also include data structures 336 to provide electrical power to at least one turbine 100. The data structures 336 may include operations similar to those described with respect to the method 200 for providing electrical power to at least one turbine 100. The server system memory 332 may also include other files 338, applications, modules, and the like.

The server 326 may also include a processor 342 or a processing unit to control operation of other devices in the server 326. The server 326 may also include I/O device 344. The I/O devices 344 may be similar to I/O devices 318 of communication devices 302. The server 326 may further include other devices 346, such as a monitor or the like to provide an interface along with the I/O devices 344 to the server 326.

The server 326 may also include a hard disk drive 348. A system bus 350 may connect the different components of the server 326. A network interface 352 may couple the server 326 to the network 328 via the system bus 350.

The flowcharts and step diagrams in the figures illustrate the architecture, functionality, and operation of possible implementations of systems, methods, and computer program products according to various embodiments of the present invention. In this regard, each step in the flowchart or step diagrams may represent a module, segment, or portion of code, which comprises one or more executable instructions for implementing the specified logical function(s). It should also be noted that, in some alternative implementations, the functions noted in the step may occur out of the order noted in the figures. For example, two steps shown in succession may, in fact, be executed substantially concurrently, or the steps may sometimes be executed in the reverse order, depending upon the functionality involved. It will also be noted that each step of the step diagrams and/or flowchart illustration, and combinations of steps in the step diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, it should be appreciated that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A method of providing electrical power to at least one wind turbine (100), the method comprising:
providing at least one electrical power monitoring system (210), wherein the at least one electrical power monitoring system (200) monitors an electrical power supplied to the at least one wind turbine (100);
monitoring a first power system (105) which supplies the electrical power to the at least one wind turbine (100,210);
determining whether the electrical power supplied by the first power system (105) is outside a first range (220);
disabling the first power system (105) if the electrical power is not inside the first range (230); and
enabling a second power system (190,190') to supply the electrical power after the first power system (105) is disabled (240).

2. The method of claim 1, wherein after the step of enabling the second power system (190,190') the method further comprises:
determining whether the first power system (105) can supply the electrical power inside the first range (250);
disabling the second power system (190,190') if the first power system (105) can supply the electrical inside the first range (260); and
reenabling the first power system (105) to supply the electrical power to the at least one wind turbine (100,270).

3. The method of any preceding claim, wherein the step of enabling the second power system (190,190') comprises:
supplying the electrical power to energize a turbine control system (180); and
supplying the electrical power to energize a yaw drive system (150).

4. The method of any preceding claim, wherein the step of enabling the second power system (190,190') comprises supplying the electrical power to energize the at least one wind turbine (100).

5. The method of any preceding claim, wherein the second power system (190, 190') comprises at least one of: a generator set; at least one battery; and combinations thereof.

6. A system for providing electrical power to at least one wind turbine (100), wherein the wind turbine (100) comprises: a nacelle (120), a hub (130), a tower (110); the system comprising:
at least one electrical power monitoring system, wherein the electrical power monitoring system monitors an electrical power supplied to the at least one wind turbine (100);
a first power system (105) which supplies the electrical power to the at least one wind turbine (100);
a first power system monitor;
means for determining whether the electrical power supplied by the first power system (105) is outside a first range;
a first power system disabler if the electrical power is not inside the first range;
a second power system (190,190') to supply the electrical power after the first power system (105) is disabled; wherein the second power system (190,190') comprises at least one of: a generator set; at least one battery; and combinations thereof;
means for enabling the second power system (190,190');
means for determining whether the first power system (105) can supply the electrical power inside the first range, after the second power system (190,190') is enabled;
means for disabling the second power system (190,190'), if the first power system (105) can supply the electrical inside the first range; and
means for reenabling the first power system (105).

7. The system of claim 6, wherein the second power system (190,190') supplies the electrical power to:
energize a turbine control system (180); and
energize a yaw drive system (150).

8. The system of claim 6 or claim 7, wherein the second power system (190,190') is installed within a nacelle (120) of the at least one wind turbine (100).

9. The system of any of claims 6 to 8, wherein the second power system (190, 190') is installed within a tower (110) of the at least one wind turbine (100).

10. The method of any of claims 6 to 9, wherein the second power system (190, 190') is installed within the sub-station of the at least one wind farm.
